(19) Europäisches Patentamt
European Patent Office
Office européen des brevets

(11) **EP 1 526 676 B1**

(12) **EUROPEAN PATENT SPECIFICATION**

(45) Date of publication and mention
of the grant of the patent:
**03.01.2007 Bulletin 2007/01**

(51) Int Cl.:
**H04L 9/08** (2006.01)

(21) Application number: **04256422.9**

(22) Date of filing: **19.10.2004**

(54) **Conference session key distribution method on an id-based cryptographic system**

Verfahren zur Verteilung von Konferenzschlüsseln, gemäss einem Identitätsbasierten Verschlüsselungssystem.

Méthode de distribution d'une clé de session de conférence, utilisant un système cryptographique basé sur l'identité (ID-based).

(84) Designated Contracting States:
**DE FR GB NL**

(30) Priority: **20.10.2003 KR 2003072982**

(43) Date of publication of application:
**27.04.2005 Bulletin 2005/17**

(73) Proprietor: **SAMSUNG ELECTRONICS CO., LTD.**
**Suwon-si,**
**Gyeonggi-do (KR)**

(72) Inventors:
• **Jung, Bae-eun**
**Seongnam-si**
**Gyeonggi-do (KR)**
• **Kim, Dae-youb**
**Dongjak-gu**
**Seoul (KR)**

(74) Representative: **Greene, Simon Kenneth**
**Elkington and Fife LLP,**
**Prospect House,**
**8 Pembroke Road**
**Sevenoaks,**
**Kent TN13 1XR (GB)**

(56) References cited:
**EP-A- 0 739 105**          **US-A- 5 896 455**

• **SHENG-BO XU ET AL: "A new identity-based conference key distribution scheme" IEEE, 25 June 2000 (2000-06-25), pages 269-269, XP010510145**
• **HARN L ET AL: "ID-BASED CRYPTOGRAPHIC SCHEMES FOR USER IDENTIFICATION, DIGITAL SIGNATURE, AND DEY DISTRIBUTION" IEEE JOURNAL ON SELECTED AREAS IN COMMUNICATIONS, IEEE INC. NEW YORK, US, vol. 11, no. 5, 1 June 1993 (1993-06-01), pages 757-760, XP000399843 ISSN: 0733-8716**
• **SMART N P: "Identity-based authenticated key agreement protocol based on Weil pairing" ELECTRONICS LETTERS, IEE STEVENAGE, GB, vol. 38, no. 13, 20 June 2002 (2002-06-20), pages 630-632, XP006018324 ISSN: 0013-5194**

**Description**

The present invention relates to a data transmission method, and more particularly, to a method of distributing a conference session key which is shared in order to encrypt data between a plurality of parties.

As computers are greatly developed, networks connecting the computers become more important and useful. However, recently abuses of the computers and networks have increased. So, there is a need to implement network security techniques.

An inter-party key sharing protocol is a protocol used for keeping secrecy of data transmitted through the networks. A standard protocol is Diffie-Hellman type protocol, which is based on difficulty in solving an elliptic curve cryptographic discrete logarithm problem. The Diffie-Hellman type protocol is based on a public key infrastructure (PKI) encryption. However, the PKI encryption has shortcomings that it is necessarily involved in a participation of a reliable authentication center, since integrity of a public key must be guaranteed by the authentication center.

Because of the shortcomings of the PKI encryption, much research has been paid on an ID-based key sharing protocol which is not based on the PKI encryption. Unfortunately, conventional ID-based key sharing protocols have problems that they are vulnerable to a disguised attack and can not provide a forward secrecy.

EP 739105 describes methods for signature and key generation. In an embodiment, each of a pair of correspondents generate a pair of random numbers. A session key is obtained from one random number from each of the pair of correspondents. In a different embodiment, a key exchange protocol is described.

Xu and Tilborg, ISIT Sorrento 2000, June 2000, page 269, describe "a new identity - based conference key distribution scheme". Each user generates a random number. One user initiates exchange, sends a message to other users, and receives replies. The one user calculates a conference key, and uses it to encrypt the user's ID. A message is sent to all other users, who calculate the conference key from it and use it to verify the ID.

According to an aspect of the present invention, there is provided a method of distributing a session shared key for encryption from a session initiating party to a plurality of session participating parties in a single conference session on an ID-based cryptographic system according to claim 1.

According to an aspect of the present invention, there is provided a method of distributing a session shared key for encryption from a session initiating party to a plurality of session participating parties in a single conference session on an ID-based cryptographic system according to claim 6. According to another aspect of the present invention, there is provided a method of distributing a session shared key for encryption from a session initiating party to session participating parties in a single conference session on an ID-based cryptographic system according to claim 11.

According to another aspect of the present invention, there is provided a method of distributing a session shared key for encryption from a session initiating party to session participating parties in a single conference session on an ID-based cryptographic system according to claim 15.

The present invention provides a conference session key distribution method capable of resisting a disguised attack and providing a forward secrecy.

The present invention also provides a computer-readable storage medium containing a program by which a conference session key distribution method is executed in a computer.

The above and other features and advantages of the present invention will become more apparent by describing in detail exemplary embodiments thereof with reference to the attached drawings in which:

FIG. 1 is a conceptual diagram illustrating a cryptographic system using a discrete logarithm problem in a finite field; and
FIG. 2 is a flowchart illustrating steps of a conference session key distribution method according to the present invention.

The present invention and operational advantages thereof can be fully understood by referring to the accompanying drawings and explanations thereof.

Now, a conference session shared key distribution method according to the present invention will be described with reference to the accompanying drawings in detail.

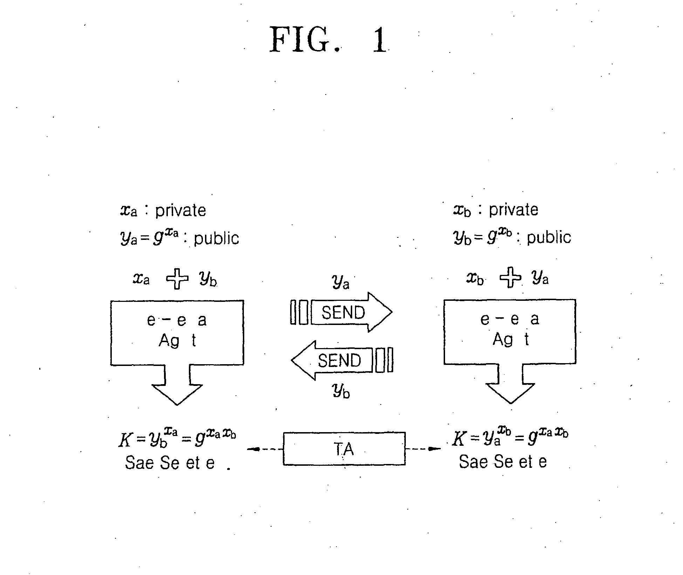

FIG. 1 is a conceptual diagram illustrating a cryptographic system using a discrete logarithm problem in a finite field.

The cryptographic system according to the present invention is based on difficulty in solving a discrete logarithm problem in an elliptic curve cryptographic group. The discrete logarithm in the elliptic curve cryptographic group is a logarithm using an elliptic curve additive group defined in a finite field, that is, its domain of definition. It is known that a problem involved in the discrete logarithm function in the finite field rather than real number field is very difficult to solve, because the estimation using a simple magnitude comparison is not available. In the present invention, the encryption of data is performed by using the difficulty in solving the discrete logarithm problem.

In the cryptographic system using the finite field discrete logarithm problem, parties which participate the data encryption share two variables p and g. The variable p is a sufficiently large prime number determined depending on a secrecy of the cryptographic system. The variable g is a generation source of the finite field multiplicative group which has a divisor q of p-1 as an order. Two parties **A** and **B** select their own secret keys $x_a$ and $x_b$, integers between 1 and q-1. The parties calculate their own public keys $y_a$ and $y_b$ by using their own secret keys, as represented by the following Equations 1 and 2.

[Equation 1]

$$y_a = g^{x_a} \bmod p$$

[Equation 2]

$$y_b = g^{x_b} \bmod p$$

The two parties **A** and **B** exchange the public keys, and share a shared key K obtained from the counter parties' public keys and their own secret keys by using the following Equation 3.

[Equation 3]

$$K = g^{x_a x_b} \bmod p$$

The party A calculates the shared key K by using its own secret key $x_a$ and the public key $x_b$ of the party **B**, as represented by the following Equation 4. The party **B** calculates the shared key K by using its own secret key $x_b$ and the public key $x_a$ of the party **A**, as represented by the following Equation 5.

[Equation 4]

$$K = y_b^{x_a} = (g^{x_b})^{x_a} = g^{x_a x_b} \bmod p$$

[Equation 5]

$$K = y_a^{x_b} = (g^{x_a})^{x_b} = g^{x_a x_b} \bmod p$$

Although any attacker knows the public key, he must solve the discrete logarithm problem in the cryptographic system. Therefore, the user's secret key is not revealed.

In the Diffie-Hellmann method which basically utilizes the system illustrated in FIG. 1, both users have to temporarily generate their own secret keys and public keys at every event of communication in a practical application. Therefore, it is involved in the inconvenience that an authentication center authenticates the users at every event of communication.

Harn and Yang have proposed a cryptographic system to solve the inconvenience by sharing a temporary key at every communication session by using identification (ID) information. The system is called an ID-based cryptographic system.

In addition, Xu and Tilborg have proposed a multi-party key sharing protocol using the Harn and Yang's method. The multi-party key sharing protocol is a protocol which implements key sharing among more than three parties and includes a key distribution protocol and a key agreement protocol. The key distribution protocol is a protocol in which a session initiating party generates a key and securely distributes the key into the other parties as a shared key. The key agreement protocol is a protocol where a common key to all the participating parties is commonly processed to be used as a session shared key.

The Xu and Tilburg's method is a key distribution protocol comprising an ID-based cryptographic system implementation step and a key sharing protocol step. The ID-based cryptographic system utilizes the Harn and Yang's method.

The parties participating each conference session are classified into a session initiating party A and session participating parties B and C.

In the ID-based cryptographic system implementation step, a key authentication center (KAC) provides its own public key y. The parties i (i = A, B, C) participating the session know public key parameters G, p, $\alpha$, y and f. The parameter G is a multiplicative group GF(P)* of a finite field comprising modulo p integers. The parameter p is a sufficiently large prime number. The "modulo p" is an operator of which result is a remainder in division of p. The group G has the parameter $\alpha$ as its generation source. The parameter f is a hash function. Each party i has a secret $s_i$ and a public key $r_i$ provided by KAC.

The steps of the Xu and Tilborg's key sharing protocol are as follows.

Step 1) The party A selects an integer $v_1$, which is coprime to p-1, between integers 1 and p-1.

Step 2) The party A generates temporary public keys $w_1$ and $\eta_1$ represented by the following Equations 6 and 7, respectively.

[Equation 6]

$$w_1 = y^{v_1} (\mathrm{mod}\ p)$$

[Equation 7]

$$\eta_1 = (f(ID_1, time) - v_1 w_1)s_1^{-1}(\mathrm{mod}\ p-1)$$

In Equation 7, $ID_1$ denotes ID information of the party A and *time* denotes time information on the time of generating Equation 7.

Step 3) The party A generates a message ($ID_1$, $r_1$, $w_1$, $\eta_1$, *time*) and transports the message to the session participating parties B and C.

Step 4) The session participating parties B and C receive the message ($ID_1$, $r_1$, $w_1$, $\eta_1$, *time*) and determine that the message satisfies the following Equation 8.

[Equation 8]

$$y^{f(ID_1,\ time)} = w_1^{w_1}(\alpha^{EID_1} r_1^{-r_1})^{\eta_1} (\mathrm{mod}\ p)$$

In Equation 8, $EID_1 = f(ID_1)$.

If the message is sent by a valid session initiating party, it satisfies Equation 8. If the message is sent by an invalid session initiating party, it does not satisfy Equation 8. Therefore, the validity of the message sent by the party A can be completely determined by using Equation 8. In case of Equation 8 being satisfied, the protocol proceeds to the next step. Otherwise, the protocol is terminated.

Step 5) The session participating parties B and C select integers $V_B$ and $V_C$, which are coprime to p-1, between integers 1 and p-1, respectively.

Step 6) The session participating parties B and C generate their own parameters $w_j$, $n_j$, and $\eta_j$ by using the selected integer $v_j$ (j = B, C), as represented by the following Equations 9 to 11.

[Equation 9]

$$w_j = y^{v_j} \pmod{p}$$

[Equation 10]

$$n_j = w_1^{v_j} \pmod{p}$$

[Equation 11]

$$\eta_j = (n_j - v_j w_j) s_j^{-1} \pmod{p-1}$$

Step 7) The session participating parties B and C generate their own messages ($ID_j$, $r_j$, $w_j$, $n_j$, $\eta_j$) and transport the messages to the session initiating party A.

Step 8) The session initiating party A determines that the messages satisfy the following Equation 12 by using the variables received from the session participating parties B and C

[Equation 12]

$$y^{n_j} = w_j^{w_j} (\alpha^{EID_j} r_j^{-r_j})^{\eta_j} \pmod{p}$$

In Equation 12, $EID_j = f(ID_j)$.

If the message is sent by a valid session participating party, it satisfies Equation 12. If the message is sent by an invalid session participating party, it does not satisfy Equation 12. Therefore, the validity of the message sent by the session participating parties B and C can be completely determined by using Equation 12. In case of Equation 12 being satisfied, the protocol proceeds to the next step. Otherwise, the protocol is terminated.

Step 9) The session initiating party A selects an integer r between 1 and p-1 and generates a shared key $K_C$ and a variable $z_j$ represented by the following Equations 13 and 14, respectively.

[Equation 13]

$$K_C = y^r \pmod{p}$$

[Equation 14]

$$z_j = n_j^{v_1^{-1}r} \pmod{p}$$

Step 10) The session initiating party A generates $E_{Kc}(ID_1)$ by encrypting its own ID information $ID_1$ with the shared key $K_C$. Herein, the symbol E denotes an encryption algorithm.

Step 11) The session initiating party A transports a message ($z_j$, $E_{Kc}(ID_1)$) to the parties which have sent the massages satisfying Equation 12.

Step 12) The party j calculates an inverse element $v_j^{-1}$ of the integer $v_j$ in modulo p-1 and the shared key $K_C$ by using the inverse element $v_j^{-1}$, as represented by the following Equation 15.

[Equation 15]

$$K_C = (z_j)^{v_j^{-1}} \pmod{p}$$

$E_{Kc}(ID_1)$ is decrypted with the shared key $K_C$ obtained from Equation 15, and it is determined that $ID_1$ is valid. If $ID_1$ is valid, the encryption protocol using the shared key $K_C$ proceeds. If not, the protocol is terminated.

Unfortunately, the Xu and Tilborg's multi-party key sharing protocol performed through the aforementioned steps can not have performances of preventing a disguised attack and ensuring a forward secrecy, which are important in a multi-party key sharing protocol.

The disguised attack is made by an attacker who utilizes ID information of a party participating the session to intervene the protocol. In this case, it is necessary to perceive and prevent the disguised attack. However, the Xu and Tilborg's protocol can not perceive the disguised attack. This is because the following Equation 16 is satisfied by using the parameters $w_j$ and $n_j$ with the same variable $v_j$, as represented by Equations 9 and 10.

[Equation 16]

$$n_j = w_j^{v_j}$$

The attacker generates a shared key $K_C'$ and a variable $z_j'$ represented by the following Equations 17 and 18, respectively, in Step 9, encrypts ID information $ID_1$ by using the shared key $K_C'$ and variable $z_j'$ and transports a message $(z_j', E_{Kc'}(ID_1))$ to the session participating parties.

[Equation 17]

$$K_c' = y^{r'} \pmod{p}$$

[Equation 18]

$$z_j' = w_j^{r'} \pmod{p}$$

The session participating parties perform the protocol while mistaking the message for a valid message. This is because the shared key $K_C'$ is calculated by using the following Equation 19 and the ID information $ID_1$ is obtained by decrypting $E_{Kc'}(ID_1)$ by using the shared key $K_C'$.

[Equation 19]

$$K_c' = (z_j')^{v_j^{-1}} \pmod{p}$$

In addition, the attacker calculates the shared key $K_C'$ and the variable $z_j'$ represented by the following Equations 20 and 21, respectively, in Step 9, encrypts ID information $ID_1$ by using the shared key $K_C'$ and variable $z_j'$ and transports a message $(z_j', E_{Kc,}(ID_1))$ to the session participating parties.

[Equation 20]

$$K_C' = w_1^{r'} \pmod p$$

[Equation 21]

$$z_j' = n_j^{r'} \pmod p$$

The session participating parties perform the protocol while mistaking the message for a valid message. This is because the shared key $K_C'$ is calculated by using the following Equation 22 and the ID information $ID_1$ is obtained by decrypting $E_{Kc'}(ID_1)$ by using the shared key $K_C'$

[Equation 22]

$$K_C' = (z_j')^{v_j^{-1}} \pmod p$$

The reason that the session participating parties can not perceive the attacker's disguised attack is that the parties receiving the variables $z_j$ generates the session shared keys by using only its own selected integer $v_j$ irrespective of the session initiating party's selected integer $v_1$. Accordingly, there is a need to improve the method of generating the variables $z_j$.

The forward secrecy is a secray that, when permanent secret keys (long term keys) $s_i$ (i = A, B, C) for more than one party participating the protocol are revealed, the attacker can not know information on keys to the past sessions by using the revealed long term keys. If a permanent secret key is revealed in a cryptographic system of which the forward secrecy is not ensured, all the data in the past encryption session may be revealed even in case of constructing the system by generating a new secret key.

In the Xu and Tilborg's protocol, the secret value $v_j$ used to obtain the shared key in Equation 15 is used in Equation 11, as it is. In case of the secret key $s_j$ of the session participating party j being revealed, if the attacker obtains messages transported at the past session, he can calculate the secret value $v_j$ by using Equation 11 with the known values of the parameters $w_j$, $n_j$, and $\eta_j$, and the past shared key by using Equation 15. As a result, the secrecy for the data encrypted at the past session cannot be ensured.

In addition, there is a potentially weak point in the Xu and Tilborg's protocol in which the signature for authentication may be forged. Comparing Equations 9 and 11 with the Schnorr's signature generation method, the parameter $n_j$ corresponds to a message and the parameters $w_j$ and $\eta_j$ correspond to signature values, respectively. In general, the signature value generation performed by applying a hash function to the message at the time of writing the signature is considered an indispensable procedure in order to prevent signature forgeries.

On the other hand, when the attacker knows the values of the parameters $w_j$, $n_j$, and $\eta_j$, the parameters $w_j'$, $n_j'$, and $\eta_j'$ satisfying Equation 12 can be generated, as represented by Equations 23 through 25. In this case, there is a potentially weak point that an attacker can be disguised although he cannot share the key,

[Equation 23]

$$w_j' = (w_j)^t \pmod{p-1}$$

[Equation 24]

$$n_j' = n_j \cdot t \cdot w_j$$

[Equation 25]

$$\eta_j' = \eta_j \cdot t \cdot w_j$$

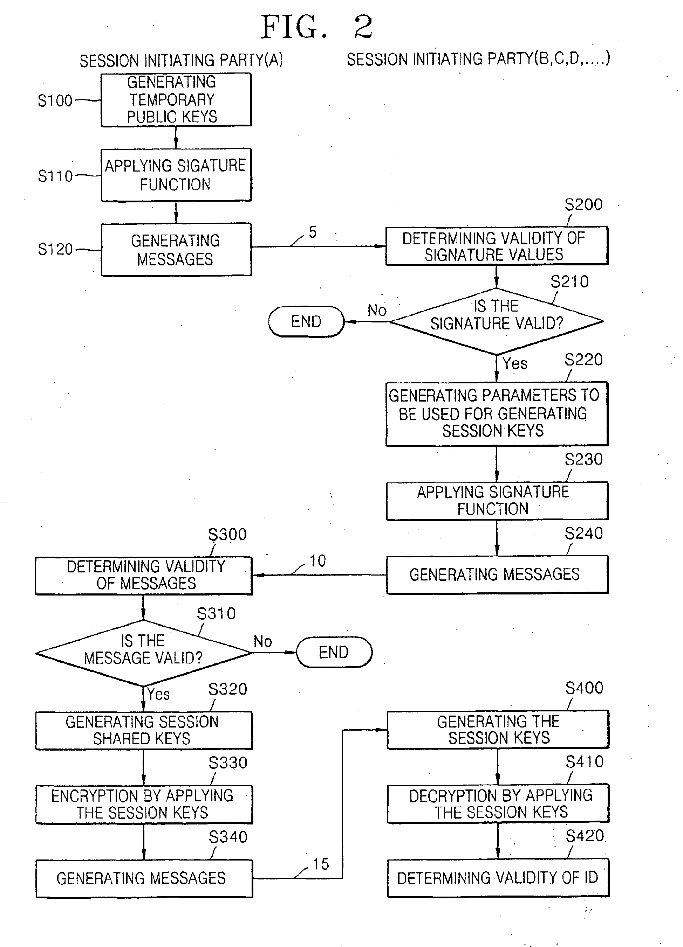

FIG. 2 is a flowchart illustrating steps of a conference session key distribution method according to the present invention. The parties involved in the key distribution method are classified into a session initiating party A and session participating parties B, C , D, ···. In the protocol, the session initiating party is sometimes called a chairperson because the session initiating party seems to preside a conference.

In the ID-based cryptographic system, a conference session key distribution protocol comprises an ID-based cryptographic system implementation step and a key sharing protocol step. The ID-based cryptographic system is constructed with a signature providing system. In the system, if a public key can be derived from personal ID information or is previously provided, the transportation of the public key may be omitted. On the other hand, in case of the public key information being needed such as a case where a signature is to be authenticated, the public key is transported.

Now, the exemplary embodiments of the key sharing protocol used in the ID-based cryptographic system proposed by Harn and Yang will be described.

All the parties participating the session know public key parameters G, p, q, $\alpha$, y and f. The parameter G, which is a partial group of a group GF(P)$^*$ , is a finite group having the sufficiently large prime number p as an order. The parameter q is a sufficiently large prime number and the associated integer q-1 has p as its factor. In the embodiment, an operation with respect to the group G is represented with a multiplication. The group G has the parameter $\alpha$ as its generation source. The parameter y is a public key of KAC. The parameter f is a hash function.. Each party i (i = A, B, C, ···) has a secret key $s_i$ and a public key $r_i$ provided by KAC.

In the Harn and Yang's cryptographic system, the ID information, the public key and the secret key satisfy the following Equation 26.

[Equation 26]

$$y^{s_i} = \alpha^{f(ID_i)}(r_i^{r_i})^{-1} \bmod q$$

The steps of the shared key distribution method according to the present invention are as follows.

The party A randomly selects two numbers $u_1$ and $v_1$ between integers 1 and p-1. The two numbers $u_1$ and $v_1$ become temporary secret keys for the session. In a case where operational time interval of the random function is longer than that of the hash function, a value obtained by hashing the temporary secret key $u_1$ may be used as the temporary secret key $v_1$ in order to reduce the operational time interval.

The temporary public keys $w_1$ and $n_1$ represented by the following Equations 27 and 28, respectively, are generated by using the temporary secret keys $u_1$ and $v_1$ (S100). These are temporary public keys in the session.

[Equation 27]

$$w_1 = y^{v_1} (\bmod q)$$

[Equation 28]

$$n_1 = w_1^{u_1} (\bmod q)$$

The signature value $\eta_1$ represented by the following Equation 29 is generated by using the temporary secret keys, the temporary public keys, a permanent secret key, the ID information $ID_1$ of the party A, and time information *time* (S110). The function applied to Equation 29 is referred to as a signature function.

[Equation 29]

$$\eta_1 = (f(n_1, ID_1, time) - v_1 w_1) s_1^{-1} (\bmod p)$$

The party A generates a message ($ID_1$, $r_1$, $w_1$, $n_1$, $\eta_1$, *time*) 5 and transports the message 5 to the session participating parties (S120).

The session participating parties receive the message ($ID_1$, $r_1$, $w_1$, $n_1$, $\eta_1$, *time*) 5 and determine that the message 5 satisfies the following Equation 30 (S200).

[Equation 30]

$$y^{f(n_1, ID_1, time)} = w_1^{w_1} (\alpha^{EID_1} r_1^{-r_1})^{n_1} (\bmod q)$$

In Equation 30, $EID_1 = f(ID_1)$.

If the message 5 is sent by a valid session initiating party, it satisfies Equation 30. If the message 5 is sent by an invalid session initiating party, it does not satisfy Equation 30. Therefore, the validity of the message sent by the party A can be completely determined by using Equation 30. In case of Equation 30 being satisfied, the protocol proceeds to the next step. Otherwise, the protocol is terminated (S210).

Each session participating party randomly selects two integers $u_j$ and $v_j$ (j = B, C, D, .) between integers 1 and p-1. The two integers become temporary secret keys of the corresponding session participating party. In a case where operational time interval of the random function is longer than that of the hash function, a value obtained by hashing the temporary secret key $u_j$ may be used as the temporary secret key $v_j$ in order to reduce the operational time interval.

The temporary public keys $w_j$ and $n_j$ represented by the following Equations 31 and 32, respectively, are generated by using the temporary secret keys $u_j$ and $v_j$ of each session participating party (S220). These temporary public keys become parameter used for generating session keys.

[Equation 31]

$$w_j = y^{v_j} (\bmod q)$$

[Equation 32]

$$n_j = w_1^{u_j} (\bmod q)$$

The signature value $\eta_j$ represented by the following Equation 33 is generated by applying the temporary secret keys, the temporary public keys, a permanent secret key, and the ID information $ID_j$ of the party j (j = B, C, D, ⋯) to the signature function (S230).

## [Equation 33]

$$\eta_j = (f(n_j) - v_j w_j) s_j^{-1} \pmod{p}$$

Each session participating party generates its own message $(ID_j, r_j, w_j, n_j, \eta_j)$ 10 and transports the massage 10 to the session initiating party A (S240).

The session initiating party A receives the massages 10 and determines that the messages 10 satisfy the following Equation 34 by using the received variables (S300).

## [Equation 34]

$$y^{f(n_j)} = w_j^{w_j} (\alpha^{E ID_j} r_j^{-r_j})^{n_j} \pmod{q}$$

In Equation 34, E $ID_j = f(ID_j)$.

If the message 10 is sent by a valid session participating party, it satisfies Equation 34. If the message 10 is sent by an invalid session participating party, it does not satisfy Equation 34. Therefore, the validity of the message sent by each session participating party can be completely determined by using Equation 34. In case of Equation 34 being satisfied, the protocol proceeds to the next step. Otherwise, the protocol is terminated (S310).

The session initiating party A generates a shared key $K_C$ and a variable $z_j$, which is used for generating the shared keys in the session participating parties, represented by the following Equations 35 and 36, respectively (S320). The session initiating party A generates $E_{Kc}(ID_1)$ by encrypting its own ID information $ID_1$ with the shared key $K_C$ (S330). Herein, the symbol E denotes an encryption algorithm.

## [Equation 35]

$$K_C = n_1^{u_1} \pmod{q}$$

## [Equation 36]

$$z_j = (n_1 \cdot n_j)^{u_1} \pmod{q}$$

The session initiating party A transports the message $(z_j, E_{Kc}(ID_1))$ 15 to the session participating parties which have sent the massages 10 determined to be valid in Step S310 (S340).

The session participating parties receiving the messages 15 calculate shared keys $K_C$ represented by the following Equation 37 (S400).

## [Equation 37]

$$K_C = z_j \cdot (n_1^{u_j})^{-1} \pmod{q}$$

The ID information is obtained by decrypting $E_{Kc}(ID_1)$ with the shared key $K_C$ obtained from Equation 37 (S410), and it is determined that $ID_1$ is identical to the ID information $ID_1$ received in the message 15 (S420). If the ID information of the session initiating party A is identical, the encryption protocol using the shared key $K_C$ proceeds. If not, the protocol is terminated.

Now, the exemplary embodiments of the key sharing protocol according to the present invention used in the ID-based cryptographic system using a Weil Pairing function defined in an elliptic curve encryption group will be described.

All the parties participating the session know public key parameters G, p, q, α, y, e, $f_1$, $f_2$, and $f_3$. The parameter

G is a finite group having a sufficiently large prime number p as an order. The group G has the parameter $\alpha$ as its generation source. The parameter y is a public key of KAC. The parameter e is a Weil Pairing function defined in an elliptic curve. The parameters $f_1$ and $f_2$ are hash functions defined in the integer field. The parameter $f_3$ is a hash function defined in the group G. In the embodiment, an operation with respect to the group G is represented with an addition. The expression [x]y denotes a value of x-times addition on the element y of the group G.

Each party i (i = A, B, C, ···) has a secret key $s_i$ and a public key $r_i$ provided by KAC. The public key $r_i$ is a value derived from the ID information $ID_i$ of each party i. The secret key $s_i$ is calculated by using the following Equation 38.

[Equation 38]

$$s_i = [s] \cdot r_i$$

The value s in Equation 38 is known to only the KAC and satisfies the following Equation 39.

[Equation 39]

$$y = [s]\alpha$$

Steps of the shared key distribution method according to the present invention are as follows.

The party A randomly selects two numbers $u_1$ and $v_1$ between 1 and p-1. The two numbers $u_1$ and $v_1$ become temporary secret keys for the session. In a case where operational time interval of the random function is longer than that of the hash function, a value obtained by hashing the temporary secret key $u_1$ may be used as the temporary secret key $v_1$ in order to reduce the operational time interval.

The temporary public keys $w_1$ and $n_1$ represented by the following Equations 40 and 41, respectively, are generated by using the temporary secret keys $u_1$ and $v_1$ (S100).

[Equation 40]

$$w_1 = [v_1]\alpha$$

[Equation 41]

$$n_1 = [u_1]w_1$$

The signature value $\eta_1$ represented by the following Equation 42 is generated by using the temporary secret keys, the temporary public keys, a permanent secret key, the ID information $ID_1$ of the party A, and time information *time* (S110).

[Equation 42]

$$\eta_1 = [v_1^{-1}]([f_2(f_3(n_1), ID_1, time)]\alpha + [f_3(w_1)]s_1)$$

The party A generates a message ($ID_1$, $w_1$, $n_1$, $\eta_1$, *time*) 5 and transports the message 5 to the session participating parties (S120).

The session participating parties receive the message ($ID_1$, $w_1$, $n_1$, $\eta_1$, *time*) 5 and determine that the message 5 satisfies the following Equation 43 (S200).

[Equation 43]

$$e(w_1, \eta_1) = e(\alpha, [f_2(f_3(n_1), ID_1, time)]\alpha) \cdot e(y, [f_3(w_1)]r_1)$$

If the message 5 is sent by a valid session initiating party, it satisfies Equation 43. If the message 5 is sent by an invalid session initiating party, it does not satisfy Equation 43. Therefore, the validity of the message sent by the party A can be completely determined by using Equation 43. In case of Equation 43 being satisfied, the protocol proceeds to the next step. Otherwise, the protocol is terminated (S210).

Each session participating party randomly selects two integers $u_j$ and $v_j$ (j = B, C, D, ···) between 1 and p-1 as its temporary secret keys, and generates its temporary public keys $w_j$ and $n_j$ represented by the following Equations 44 and 45, respectively (S220). The temporary public keys become parameters used for generating the session key. In a case where operational time interval of the random function is longer than that of the hash function, a value obtained by hashing the temporary secret key $u_j$ may be used as the temporary secret key $v_j$ in order to reduce the operational time interval.

[Equation 44]

$$w_j = [v_j]\alpha$$

[Equation 45]

$$n_j = [u_j]w_1$$

The signature value $\eta_j$ represented by the following Equation 46 is generated by applying the temporary secret keys, the temporary public keys, a permanent secret key, and the ID information $ID_j$ of the party j (j = B, C, D, ...) to the signature function (S230).

[Equation 46]

$$\eta_j = [v_j^{-1}]([f_3(n_j)]\alpha + [f_3(w_j)]s_j)$$

Each session participating party generates its own message ($ID_j$, $w_j$, $n_j$, $\eta_j$) 10 and transports the massage 10 to the session initiating party A (S240).

The session initiating party A receives the massages 10 and determines that the messages satisfy the following Equation 47 by using the received variables (S300).

[Equation 47]

$$e(w_j, \eta_j) = e(\alpha, [f_3(n_j)]\alpha) \cdot e(y, [f_3(w_j)]r_j)$$

If the message 10 is sent by a valid session participating party, it satisfies Equation 47. If the message 10 is sent by an invalid session participating party, it does not satisfy Equation 47. Therefore, the validity of the message sent by each session participating party can be completely determined by using Equation 47. In case of Equation 47 being satisfied, the protocol proceeds to the next step. Otherwise, the protocol is terminated (S310).

The session initiating party A generates a shared key $K_C$ and a variable $z_j$, which is used for generating the shared keys in the session participating parties, represented by the following Equations 48 and 49, respectively (S320). The session initiating party A generates $E_{Kc}(ID_1)$ by encrypting its own ID information $ID_1$ with the shared key $K_C$ (S330). Herein, the symbol E denotes an encryption algorithm.

[Equation 48]

$$K_C = [u_1]n_1$$

[Equation 49]

$$z_j = [u_1](n_1 + n_j)$$

The session initiating party A transports the message $(Z_j, E_{Kc}(ID_1))$ 15 to the session participating parties which have sent the massages determined to be valid in Step S310 (S340).

The session participating parties receiving the messages 15 calculate shared keys $K_C$ represented by the following Equation 50 (S400).

[Equation 50]

$$K_C = z_j - [u_j]n_1$$

The ID information is obtained by decrypting $E_{Kc}(ID_1)$ with the shared key $K_C$ obtained from Equation 50 (S410), and it is determined that $ID_1$ is identical to the ID information $ID_1$ received in the message 5 (S420). If the ID information of the session initiating party A is identical, the encryption protocol using the shared key $K_C$ proceeds. If not, the protocol is terminated.

According to the exemplary embodiments of the shared key distribution method of the present invention, it is possible to prevent the disguised attack by generating two different temporary secret keys in Steps 100 and 220 in order for the attacker not to know the values of the two temporary secret keys and using the temporary secret keys of the session initiating party at the time of generating the session key generation variables $z_j$. In addition, it is possible to ensure the forward secrecy by preventing the attacker from calculating the past session shared keys even in a case where the attacker may know the permanent secret keys of the parties participating the session. Besides, it is possible to prevent the attacker from being disguised without sharing keys by solving the potentially weak point in the Xu and Tilborg's protocol. Since there is no increase in calculation amount, the protocol of the present invention is more effective than the conventional protocol.

The present invention can be implemented with codes recorded on a computer-readable storage medium. The computer includes all the apparatuses having data processing functions. The computer-readable storage media includes all kinds of recording apparatuses which can be read out by the computers. The examples of the computer-readable apparatuses are ROMs, RAMS, CD-ROMs, magnetic tapes, floppy disks, and optical data storage apparatuses.

While the present invention has been particularly shown and described with reference to exemplary embodiments thereof, it will be understood by those of ordinary skill in the art that various changes in form and details may be made therein without departing from the scope of the present invention as defined by the following claims.

According to the shared key distribution method of the present invention, it is possible to provide an effective ID-based cryptographic system capable of preventing a disguised attack and ensuring a forward secrecy by selecting two different temporary secret keys, generating a message and generating session key generation variables by using temporary secret keys of a session initiating party.

**Claims**

1.  A method of distributing a session shared key for encryption from a session initiating party to a plurality of session participating parties in a single conference session on an ID-based cryptographic system over a computer network, the method comprising the steps, carried out at the session initiating party of:

    (a) generating (s100) two temporary secret keys for the session initiating party, generating two temporary public keys for the session initiating party by using the temporary secret keys for the session initiating party, and generating a signature value obtained by applying a predetermined signature function to the keys;
    (b) transporting to the session participating parties a message (5) including ID information of the session initiating party, the temporary public keys for the session initiating party, and the signature value;
    (c) receiving from the session participating parties messages (10) including the temporary public keys for the session participating parties and determining validity of the messages;
    (d) generating shared key generation variables for the session participating parties which have sent valid messages;
    (e) generating the session shared key (s32.0) by using one of the two temporary secret keys for the session initiating party and the temporary public key for the session initiating party generated using said one of the two temporary secret keys, and encrypting the ID information of the session initiating party by using the session shared key; and
    (f) transporting a message (15) including the shared key generation variables and the encrypted ID information to the session participating parties which have sent valid messages,

    wherein the ID-based cryptographic system is a system satisfying an equation $y^{S_i} = \alpha^{f(ID_i)}(r_i{}^{r_i})^{-1} \bmod q$ on a finite group G having an order p, that is, a partial group of $GF(q)^*$, wherein q is a sufficiently large prime number and the associated integer q-1 has p as its factor, and wherein parameters y, $\alpha$, f, $r_i$, $s_i$, and $ID_i$ denote a public key of a key authentication center, a generation source of the finite group G, a hash function, a public key for a party i, a secret key for the party i, and ID information, respectively,
    wherein the step (a) comprises the steps of:

    (a1) randomly selecting temporary secret keys $u_1$ and $v_1$ between 1 and p-1;
    (a2) generating temporary public keys (s100) $w_1 = y^{v1}(\bmod q)$ and $n_1 = w_1{}^{u1}(\bmod q)$; and
    (a3) generating the signature value (s110) $\eta_1 = (f(n_1,ID_1,time)-v_1 w_1)s_1{}^{-1} \ (\bmod p)$, wherein parameters $ID_1$ and *time* denote ID information of the session initiating party and time information.

2.  The method of distributing a session shared key for encryption from session initiating party to a plurality of session participating parties according to claim 1, wherein the step (a1) comprises the steps of:

    (a11) randomly selecting the first temporary secret key $u_1$ between 1 and p-1; and
    (a12) generating the second temporary secret key $v_1$ by applying the hash function to the first temporary secret key $u_1$.

3.  The method of distributing a session shared key for encryption from a session initiating party to a plurality of session participating parties according to claim 1 or 2, wherein the step (c) comprises the steps of:

    (c1) receiving messages ($ID_j$, $r_j$, $w_j$, $n_j$, $\eta_j$) (10) from the session participating parties, wherein parameters $ID_j$, $r_j$, $w_j$, $n_j$, and $\eta_j$ denote ID information of the party j, a permanent public key of the party j, temporary public keys generated by the party j, and a signature value generated by the party j; and
    (c2) determining (s300) that the messages (10) received from the parties j satisfy an equation $y^{f(nj)} = w_j{}^{wj}(\alpha^{EID_j}r_j{}^{-rj})^{nj} (\bmod q)$, wherein $EID_j = f(ID_j)$.

4.  The method of distributing a session shared key for encryption from a session initiating party to a plurality of session participating parties according to claim 3, wherein the step (d) is a step of generating the public key generation variable $z_j = (n_1 \cdot n_j)^{u1} (\bmod q)$ for the session participating parties which satisfy the equation in the step (c2).

5.  The method of distributing a session shared key for encryption from a session initiating party to a plurality of session participating parties according to claim 3 or 4, wherein the step (e) comprises the steps of:

    (e1) generating the session shared key $K_c = n_1{}^{u1} (\bmod q)$.

(e2) encrypting the ID information of the session initiating party by using the session shared key to generate $E_{Kc}(ID_1)$, wherein E denotes encryption algorithm.

6. A method of distributing a session shared key for encryption from a session initiating party to a plurality of session participating parties in a single conference session on an ID-based cryptographic system over a computer network, the method comprising the steps carried out at the session initiating party, of:

(a) generating (s100) two temporary secret keys for the session initiating party, generating two temporary public keys for the session initiating party by using the temporary secret keys for the session initiating party, and generating a signature value obtained by applying a predetermined signature function to the keys;
(b) transporting to the session participating parties a message (5) including ID information of the session initiating party, the temporary public keys for the session initiating party, and the signature value;
(c) receiving from the session participating parties messages (10) including the temporary public keys for the session participating parties and determining validity of the messages;
(d) generating shared key generation variables for the session participating parties which have sent valid messages;
(e) generating the session shared key (s320) by using one of the two temporary secret keys for the session initiating party and the temporary public key for the session initiating party generated using said one of the two temporary secret keys, and encrypting the ID information of the session initiating party by using the session shared key; and
(f) transporting a message (15) including the shared key generation variables and the encrypted ID information to the session participating parties which have sent valid messages,

wherein the ID-based cryptographic system is a system using a Weil Pairing operation in a finite elliptic curve encryption group G having a sufficiently large prime number p as an order,
wherein the step (a) comprises the steps of:

(a1) randomly selecting temporary secret keys $u_1$ and $v_1$ between 1 and p-1;
(a2) generating temporary public keys (s100) $w_1 = [v_1]\alpha$ and $n_1 = [u_1]w_1$, wherein the parameter $\alpha$ is a generation source of the finite elliptic curve encryption group G; and
(a3) generating (s110) the signature value $\eta_1 = [v_1^{-1}]([f_2(f_3(n_1),ID_1,time)]\alpha + [f_3(w_1)]s_1)$, wherein $f_2$, $f_3$, $ID_1$, time, and $s_1$ denote a hash function defined in an integer domain, a hash function defined in the finite elliptic curve encryption group G, ID information of the session initiating party, time information, and a permanent secret key of the session initiating party, respectively.

7. The method of distributing a session shared key for encryption from a session initiating party to a plurality of session participating parties according to claim 6, wherein the step (a1) comprises the steps of:

(a11) randomly selecting the first temporary secret key $u_1$ between 1 and p-1; and
(a12) generating the second temporary secret key $v_1$ by applying the hash function to the first temporary secret key $u_1$.

8. The method of distributing a session shared key for encryption from a session initiating party to a plurality of session participating parties according to claim 6 or 7, wherein the step (c) comprises the steps of:

(c1) receiving messages ($ID_j$, $w_j$, $n_j$, $\eta_j$) from the session participating parties, wherein parameters $ID_j$, $w_j$, $n_j$, and $\eta_j$ denote ID information of the party j, temporary public keys generated by the party j, and a signature value generated by the party j; and
(c2) determining (s300) that the party j satisfies an equation $e(w_j,\eta_j) = e(\alpha,[f_3(n_j)]\alpha)\cdot e(y,[f_3(w_j)]r_j)$, wherein e, y, and $r_j$ denote a Weil Pairing function defined on an elliptic curve, a public key of a key authentication center, and a permanent public key of the session participating party j.

9. The method of distributing a session shared key for encryption from a session initiating party to a plurality of session participating parties according to claim 8, wherein the step (d) is a step of generating the public key generation variable $z_j = [u_1](n_1 + n_j)$ for the session participating parties which satisfy the equation in the step (c2).

10. The method of distributing a session shared key for encryption from a session initiating party to a plurality of session participating parties according to claim 8 or 9, wherein the step (e) comprises the steps of:

(e1) generating the session shared key $K_c = [u_1]n_1$; and
(e2) encrypting the ID information of the session initiating party by using the session shared key to generate $E_{Kc}(ID_1)$, wherein E denotes encryption algorithm.

**11.** A method of distributing a session shared key for encryption from a session initiating party to session participating parties in a single conference session on an ID-based cryptographic system over a computer network, the method comprising the steps, carried out at the session participating parties of:

(a) receiving from the session initiating party a message including ID information, two temporary public keys, and a predetermined signature value of the session initiating party and determining validity of the message;
(b) generating two temporary secret keys for the session participating parties, generating two temporary public keys for the session participating parties by using the temporary secret keys for the session participating parties, and generating a signature value obtained by applying a predetermined signature function to the keys;
(c) transporting to the session initiating party a message including the temporary public keys for the session participating parties and the signature value;
(d) receiving from the session initiating party a message including a shared key generation variable and encrypted ID information of the session initiating party;
(e) generating the session shared key by using the shared key generation variable, one of the two temporary secret keys for the session participating party, and the temporary public key for the session initiating party generated using said one of the two temporary secret keys; and
(f) decrypting the encrypted ID information of the session initiating party by using the session shared key, and determining that the session shared key is valid,

wherein the ID-based cryptographic system is a system satisfying an equation $y^{si} = \alpha^{f(IDi)}(r_i^{ri})^{-1} \bmod q$ on a finite group G having an order p, that is, a partial group of GF(q)*, wherein q is a sufficiently large prime number and the associated integer q-1 has p as its factor, and wherein parameters y, $\alpha$, f, $r_i$, $s_i$, and $ID_i$ denote a public key of a key authentication center, a generation source of the finite group G, a hash function, a public key for a party i, a secret key for the party i, and ID for the party i, respectively,
wherein the step (b) comprises the steps of:

(b1) randomly selecting temporary secret keys $u_j$ and $v_j$ between 1 and p-1;
(b2) generating temporary public keys $w_j = y^{vj}(\bmod q)$ and $n_j = w_1^{uj}(\bmod q)$; and
(b3) generating the signature value $\eta_j = (f(n_j)-v_j w_j)s_j^{-1} (\bmod p)$.

**12.** The method of distributing a session shared key for encryption from a session initiating party to session participating parties according to claim 11, wherein the step (b1) comprises the steps of:

(b11) randomly selecting the first temporary secret key $u_j$ between 1 and p-1; and
(b12) generating the second temporary secret key $v_j$ by applying the hash function to the first temporary secret key $u_j$.

**13.** The method of distributing a session shared key for encryption from a session initiating party to session participating parties according to claim 11 or 12, wherein the step (a) comprises the steps of:

(a1) receiving a message $(ID_1, r_1, w_1, n_1, \eta_1, time)$ from the session initiating party, wherein parameters $ID_1$, $r_1$, $w_1$, $n_1$, $\eta_1$, and *time* denote ID information of the session initiating party, a permanent public key of the session initiating party, temporary public keys generated by the session initiating party, a signature value generated by the session initiating party, and time information; and
(a2) determining that the message satisfies an equation
$y^{f(n_1,ID_1,time)} = w_1^{w1}(\alpha^{EID_1}r_1^{-r1})^{\eta1} (\bmod q)$, wherein $EID_1 = f(ID_1)$.

**14.** The method of distributing a session shared key for encryption from a session initiating party to session participating parties according to claim 13, wherein the step (e) is a step of generating the session shared key $K_C = z_j \cdot (n_1^{uj})^{-1} (\bmod q)$, and wherein $z_j$ denotes the shared key generation variable received from the session initiating party.

**15.** A method of distributing a session shared key for encryption from a session initiating party to session participating parties in a single conference session on an ID-based cryptographic system over a computer network, the method comprising the steps carried out at the session participating parties of:

(a) receiving from the session initiating party a message including ID information, two temporary public keys, and a predetermined signature value of the session initiating party and determining validity of the message;

(b) generating two temporary secret keys for the session participating parties, generating two temporary public keys for the session participating parties by using the temporary secret keys for the session participating parties, and generating a signature value obtained by applying a predetermined signature function to the keys;

(c) transporting to the session initiating party a message including the temporary public keys for the session participating parties and the signature value;

(d) receiving from the session initiating party a message including a shared key generation variable and encrypted ID information of the session initiating party;

(e) generating the session shared key by using the shared key generation variable, one of the two temporary secret keys for the session participating party, and the temporary public key for the session initiating party generated using said one of the two temporary secret keys; and

(f) decrypting the encrypted ID information of the session initiating party by using the session shared key, and determining that the session shared key is valid,

wherein the ID-based cryptographic system is a system using a Weil Pairing operation in a finite elliptic curve encryption group G having a sufficiently large prime number p as an order, and
wherein the step (b) comprises the steps of:

(b1) randomly selecting temporary secret keys $u_j$ and $v_j$ between 1 and p-1;

(b2) generating temporary public keys $w_j = [v_j]\alpha$ and $n_j = [u_j]w_1$, wherein the parameters $\alpha$ is a generation source of the finite elliptic curve encryption group G; and

(b3) generating the signature value $\eta_j = [v_j^{-1}]([f_3(n_j)]\alpha + [f_3(w_j)]s_j)$, wherein $f_3$ and $s_j$ denote a hash function defined in the finite elliptic curve encryption group G and a permanent secret key of the party j, respectively.

**16.** The method of distributing a session shared key for encryption from a session initiating party to session participating parties according to claim 15, wherein the step (b1) comprises the steps of:

(b11) randomly selecting the first temporary secret key $u_j$ between 1 and p-1; and

(b12) generating the second temporary secret key $v_j$ by applying the hash function to the first temporary secret key $u_j$.

**17.** The method of distributing a session shared key for encryption from a session initiating party to session participating parties according to claim 15 or 16, wherein the step (a) comprises the steps of:

(a1) receiving a message ($ID_1$, $w_1$, $n_1$, $\eta_1$, *time*) from the session initiating party, wherein parameters $ID_1$, $w_1$, $n_1$, $\eta_1$, and *time* denote ID information of the session initiating party, temporary public keys generated by the session initiating party, a signature value generated by the session initiating party, and time information; and

(a2) determining that the message satisfies an equation $e(w_1, \eta_1) = e(\alpha, [f_2(f_3(n_1), ID_1, time)]\alpha) \cdot e(y, [f_3(w_1)]r_1)$, wherein e, $f_2$, $f_3$, y, and $r_1$ denote a Weil Pairing function defined on an elliptic curve, a hash function defined in an integer domain, a hash function defined in the finite elliptic curve encryption group G, a public key of a key authentication center, and a permanent public key of the session initiating party.

**18.** The method of distributing a session shared key for encryption from a session initiating party to session participating parties according to claim 17, wherein the step (e) is a step of generating the session shared key $K_c = z_j - [u_j]n_1$, and wherein $z_j$ denotes the shared key generation variable received from the session initiating party.

**19.** The method of distributing a session shared key for encryption from a session initiating party to session participating parties according to any of claims 11 to 18, wherein the step (f) comprises the steps of:

(f1) decrypting the encrypted ID information of the session initiating party received from the session participating party by using the session shared key; and

(f2) determining that the decrypted ID information of the session initiating party is identical to the ID information of the session initiating party received in the step (a).

**20.** A computer-readable storage medium on which a program is recorded, adapted to perform all the steps of a method according to any preceding claim when executed in a computer.

**Patentansprüche**

1. Verfahren zur Verteilung eines gemeinsamen Konferenzschlüssels zum Verschlüsseln von einer Konferenzauslösepartei zu einer Mehrzahl von Konferenzteilnehmerparteien in einer einzigen Konferenzsitzung auf einem ID-basierten kryptographischen System über ein Computernetzwerk, wobei das Verfahren die Schritte umfasst, die bei der die Konferenzauslösepartei ausgeführt werden:

(a) Erzeugen (s100) zweier temporärer Geheimschlüssel für die Konferenzauslösepartei, Erzeugen zweier temporärer öffentlicher Schlüssel für die Konferenzauslösepartei unter Verwendung der temporären Geheimschlüssel für die Konferenzauslösepartei und Erzeugen eines Signaturwerts, der durch Anwenden einer vorbestimmten Signaturfunktion auf die Schlüssel erhalten ist;
(b) Transportieren einer Mitteilung (5) mit ID-Information der Konferenzauslösepartei, der temporären öffentlichen Schlüssel für die Konferenzauslösepartei und des Signaturwerts an die Konferenzteilnehmerparteien;
(c) Empfangen von Mitteilungen (10) mit den temporären öffentlichen Schlüsseln für die Konferenzteilnehmerparteien von den Konferenzteilnehmerparteien und Bestimmen der Gültigkeit der Mitteilungen;
(d) Erzeugen von Erzeugungsvariablen für die gemeinsamen Schlüssel für die Konferenzteilnehmerparteien, die gültige Mitteilungen gesendet haben;
(e) Erzeugen des gemeinsamen Konferenzschlüssels (s320) unter Verwendung einer von zwei temporären Geheimschlüsseln für die Konferenzauslösepartei und des temporären öffentlichen Schlüssels für die Konferenzauslösepartei, der unter Verwendung des einen von zwei temporären Geheimschlüsseln erzeugt ist, und Verschlüsseln der ID-Information der Konferenzauslösepartei unter Verwendung des gemeinsamen Konferenzschlüssels; und
(f) Transportieren einer Mitteilung (15) mit Erzeugungsvariablen für die gemeinsamen Schlüssel und der verschlüsselten ID-Information an die Konferenzteilnehmerparteien, die gültige Mitteilungen gesendet haben,

worin das ID-basierte kryptographische System ein System ist, das eine Gleichung $y^{S_i} = a^{f(ID_i)}(r_i^{r_i})^{-1} \bmod q$ bei einer finiten Gruppe G mit einer Ordnung p erfüllt, das heißt, eine Teilgruppe von $GF(q)^*$, worin q eine ausreichend große Primzahl ist und die zugehörige ganze Zahl q-1 den Faktor p aufweist, und worin Parameter $y$, $a$, $f$, $r_i$, $s_i$ und $ID_i$ einen öffentlichen Schlüssel eines Schlüsselautentifizierungszentrums, eine Erzeugungsquelle der finiten Gruppe G, eine Hash-Funktion, einen öffentlichen Schlüssel für eine Partei i, einen Geheimschlüssel für die Partei i und ID-Information bezeichnen,
worin der Schritt (a) die Schritte umfasst:

(a1) statistisches Auswählen temporärer Geheimschlüssel $u_1$ und $v_1$ zwischen 1 und p-1;
(a2) Erzeugen temporärer öffentlicher Schlüssel (s100) $w_1 = y^{v1} \pmod q$ und $n_1 = w_1^{u1} \pmod q$; und
(a3) Erzeugen des Signaturwerts (s110)
$\eta_1 = (f(n_1, ID_1, zeit)-v_1 w_1)s_1^{-1} \pmod p$, worin die Parameter $ID_1$ und zeit ID-Information der Konferenzauslösepartei und Zeitinformation bezeichnen.

2. Verfahren zur Verteilung eines gemeinsamen Konferenzschlüssels zum Verschlüsseln von einer Konferenzauslösepartei zu einer Mehrzahl von Konferenzteilnehmerparteien nach Anspruch 1, worin der Schritt (a1) die Schritte umfasst:

(a11) statistisches Auswählen des ersten temporären Geheimschlüssels $u_1$ zwischen 1 und p-1; und
(a12) Erzeugen des zweiten temporären Geheimschlüssels $v_1$ durch Anwenden der Hash-Funktion auf den ersten temporären Geheimschlüssel $u_1$.

3. Verfahren zur Verteilung eines gemeinsamen Konferenzschlüssels zum Verschlüsseln von einer Konferenzauslösepartei zu einer Mehrzahl von Konferenzteilnehmerparteien nach Anspruch 1 oder 2, worin der Schritt (c) die Schritte umfasst:

(c1) Empfangen von Mitteilungen ($ID_j$, $r_j$, $w_j$, $n_j$, $n_j$) (10) von den Konferenzteilnehmerparteien, worin Parameter $ID_j$, $r_j$, $w_j$, $n_j$, und $\eta_j$ ID-Information der Partei j, einen permanenten öffentlichen Schlüssel der Partei j, von der Partei j erzeugte temporäre öffentliche Schlüssel und einen von der Partei j erzeugten Signaturwert bezeichnen; und
(c2) Bestimmen (s300), dass die von den Parteien j empfangenen Mitteilungen eine Gleichung $y^{f(n_j)} = w_j^{w_j}(a^{EID_j} r_j^{-r_i})^{n_j} \pmod q$ erfüllt, worin $EID_j = f(ID_j)$.

**4.** Verfahren zur Verteilung eines gemeinsamen Konferenzschlüssels zum Verschlüsseln von einer Konferenzauslösepartei zu einer Mehrzahl von Konferenzteilnehmerparteien nach Anspruch 3, worin der Schritt (d) ein Schritt zum Erzeugen der Erzeugungsvariable für den öffentlichen Schlüssel $z_j = (n_1 \cdot n_j)^{u1}$ (mod q) für die Konferenzteilnehmerparteien ist, die die Gleichung in Schritt (c2) erfüllen.

**5.** Verfahren zur Verteilung eines gemeinsamen Konferenzschlüssels zum Verschlüsseln von einer Konferenzauslösepartei zu einer Mehrzahl von Konferenzteilnehmerparteien nach Anspruch 3 oder 4, worin der Schritt (e) die Schritte umfasst:

(e1) Erzeugen des gemeinsamen Konferenzschlüssels $K_c = n_1^{u1}$ (mod q);
(e2) Verschlüsseln der ID-Information der Konferenzauslösepartei unter Verwendung des gemeinsamen Konferenzschlüssels $E_{Kc}(ID_1)$, worin E einen Verschlüsselungsalgorithmus bezeichnet.

**6.** Verfahren zur Verteilung eines gemeinsamen Konferenzschlüssels zum Verschlüsseln von einer Konferenzauslösepartei zu einer Mehrzahl von Konferenzteilnehmerparteien in einer einzigen Konferenzsitzung auf einem ID-basierten kryptographischen System über ein Computernetzwerk, wobei das Verfahren die Schritte umfasst, die bei der die Konferenzauslösepartei ausgeführt werden:

(a) Erzeugen (s100) zweier temporärer Geheimschlüssel für die Konferenzauslösepartei, Erzeugen zweier temporärer öffentlicher Schlüssel für die Konferenzauslösepartei unter Verwendung der temporären Geheimschlüssel für die Konferenzauslösepartei und Erzeugen eines Signaturwerts, der durch Anwenden einer vorbestimmten Signaturfunktion auf die Schlüssel erhalten ist;
(b) Transportieren einer Mitteilung (5) mit ID-Information der Konferenzauslösepartei, der temporären öffentlichen Schlüssel für die Konferenzauslösepartei und des Signaturwerts an die Konferenzteilnehmerparteien;
(c) Empfangen von Mitteilungen (10) mit den temporären öffentlichen Schlüsseln für die Konferenzteilnehmerparteien von den Konferenzteilnehmerparteien und Bestimmen der Gültigkeit der Mitteilungen;
(d) Erzeugen von Erzeugungsvariablen für die gemeinsamen Schlüssel für die Konferenzteilnehmerparteien, die gültige Mitteilungen gesendet haben;
(e) Erzeugen des gemeinsamen Konferenzschlüssels (s320) unter Verwendung einer von zwei temporären Geheimschlüsseln für die Konferenzauslösepartei und des temporären öffentlichen Schlüssels für die Konferenzauslösepartei, der unter Verwendung des einen von zwei temporären Geheimschlüsseln erzeugt ist, und Verschlüsseln der ID-Information der Konferenzauslösepartei unter Verwendung des gemeinsamen Konferenzschlüssels; und
(f) Transportieren einer Mitteilung (15) mit Erzeugungsvariablen für die gemeinsamen Schlüssel und der verschlüsselten ID-Information an die Konferenzteilnehmerparteien, die gültige Mitteilungen gesendet haben,

worin das ID-basierte kryptographische System ein System ist, das eine Weil-Pairing-Funktion in einer finiten Ellipsenkurven-Verschlüsselungsgruppe G mit einer ausreichend großen Primzahl p als Ordnung verwendet, worin der Schritt (a) die Schritte umfasst:

(a1) statistisches Auswählen temporärer Geheimschlüssel $u_1$ und $v_1$ zwischen 1 und p-1;
(a2) Erzeugen (s100) temporärer öffentlicher Schlüssel $w_1 = [v_1]a$ und $n_1 = [u_1]w_1$, worin der Parameter a eine Erzeugungsquelle für die finite Ellipsenkurven-Verschlüsselungsgruppe G ist; und
(a3) Erzeugen des Signaturwerts (s110)
$\eta_1 = [v_1^{-1}]([f_2\,(f_3\,(n_1),\,ID_1,\,zeit)]\,a + [f_3\,(w_1)]s_1)$, worin $f_2$, $f_3$, $ID_1$, zeit und $s_1$ eine Hash-Funktion, die in einer ganzzahligen Domäne definiert ist, eine Hash-Funktion, die in der finiten Ellipsenkurven-Verschlüsselungsgruppe G definiert ist, ID-Information der Konferenzauslösepartei, Zeitinformation und einen permanenten Geheimschlüssel der Konferenzauslösepartei bezeichnen.

**7.** Verfahren zur Verteilung eines gemeinsamen Konferenzschlüssels zum Verschlüsseln von einer Konferenzauslösepartei zu einer Mehrzahl von Konferenzteilnehmerparteien nach Anspruch 6, worin der Schritt

(a1) die Schritte umfasst:
(a11) statistisches Auswählen des ersten temporären Geheimschlüssels $u_1$ zwischen 1 und p-1; und
(a12) Erzeugen des zweiten temporären Geheimschlüssels $v_1$ durch Anwenden der Hash-Funktion auf den ersten temporären Geheimschlüssel $u_1$.

**8.** Verfahren zur Verteilung eines gemeinsamen Konferenzschlüssels zum Verschlüsseln von einer Konferenzauslösepartei zu einer Mehrzahl von Konferenzteilnehmerparteien nach Anspruch 6 oder 7, worin der Schritt (c) die Schritte umfasst:

(c1) Empfangen von Mitteilungen ($ID_j$, $w_j$, $n_j$, $\eta_j$) von den Konferenzteilnehmerparteien, worin Parameter $ID_j$, $w_j$, $n_j$, und $n_j$ ID-Information der Partei j, von der Partei j erzeugte temporäre öffentliche Schlüssel und einen von der Partei j erzeugten Signaturwert bezeichnen; und

(c2) Bestimmen (s300), dass die Partei j eine Gleichung $e(w_j, \eta_j) = e(a, [f_3 (n_j)]a) \cdot e(y, [f_3 (w_j)]r_j)$ erfüllt, worin e, y und $r_j$ eine Weil-Pairing-Funktion bezeichnen, die auf einer Ellipsenkurve definiert ist, einen öffentlichen Schlüssel eines Schlüsselautentifizierungszentrums und einen permanenten öffentlichen Schlüssel der Konferenzteilnehmerpartei j.

9. Verfahren zur Verteilung eines gemeinsamen Konferenzschlüssels zum Verschlüsseln von einer Konferenzauslösepartei zu einer Mehrzahl von Konferenzteilnehmerparteien nach Anspruch 8, worin der Schritt (d) ein Schritt zum Erzeugen der Erzeugungsvariable für den öffentlichen Schlüssel $z_j = [u_1] (n_1 + n_j)$ für die Konferenzteilnehmerparteien ist, die die Gleichung in Schritt (c2) erfüllen.

10. Verfahren zur Verteilung eines gemeinsamen Konferenzschlüssels zum Verschlüsseln von einer Konferenzauslösepartei zu einer Mehrzahl von Konferenzteilnehmerparteien nach Anspruch 8 oder 9, worin der Schritt (e) die Schritte umfasst:

(e1) Erzeugen des gemeinsamen Konferenzschlüssels $K_c = [u_1] n_1$; und

(e2) Verschlüsseln der ID-Information der Konferenzauslösepartei unter Verwendung des gemeinsamen Konferenzschlüssels zum Erzeugen von $E_{Kc}(ID_1)$, worin E einen Verschlüsselungsalgorithmus bezeichnet.

11. Verfahren zur Verteilung eines gemeinsamen Konferenzschlüssels zum Verschlüsseln von einer Konferenzauslösepartei zu Konferenzteilnehmerparteien in einer einzigen Konferenzsitzung auf einem ID-basierten kryptographischen System über ein Computernetzwerk, wobei das Verfahren die Schritte umfasst, die bei den Konferenzteilnehmerparteien ausgeführt werden:

(a) Empfangen einer Mitteilung mit ID-Information, zwei temporären öffentlichen Schlüsseln und einem bestimmten Signaturwert der Konferenzauslösepartei von der Konferenzauslösepartei und Bestimmen der Gültigkeit der Mitteilung;

(b) Erzeugen zweier temporärer Geheimschlüssel für die Konferenzteilnehmerparteien, Erzeugen zweier temporärer öffentlicher Schlüssel für die Konferenzteilnehmerparteien unter Verwendung der temporären Geheimschlüssel für die Konferenzteilnehmerparteien, und Erzeugen eines Signaturwerts, erhalten durch Anwenden einer bestimmten Signaturfunktion auf die Schlüssel;

(c) Transportieren einer Mitteilung mit den temporären öffentlichen Schlüsseln für die Konferenzteilnehmerparteien und des Signaturwerts zur Konferenzauslösepartei;

(d) Empfangen einer Mitteilung mit einer Erzeugungsvariable für den gemeinsamen Schlüssel und verschlüsselter ID-Information der Konferenzauslösepartei von der Konferenzauslösepartei;

(e) Erzeugen der gemeinsamen Konferenzschlüssel unter Verwendung der Erzeugungsvariable für den gemeinsamen Schlüssel, eines von zwei temporären Geheimschlüsseln für die Konferenzteilnehmerpartei und des temporären öffentlichen Schlüssels für die Konferenzauslösepartei, der unter Verwendung des einen der zwei temporären Geheimschlüssel erzeugt ist; und

(f) Entschlüsseln der verschlüsselten ID-Information der Konferenzauslösepartei unter Verwendung des gemeinsamen Konferenzschlüssels und Bestimmen, dass der gemeinsame Konferenzschlüssel gültig ist,

worin das ID-basierte kryptographische System ein System ist, das eine Gleichung $y^{Si} = a^{f(ID_i)}(r_i^{ri})^{-1} \bmod q$ bei einer finiten Gruppe G mit einer Ordnung p erfüllt, das heißt, eine Teilgruppe von $GF(q)^*$, worin q eine ausreichend große Primzahl ist und die zugehörige ganze Zahl q-1 den Faktor p aufweist, und worin Parameter y, a, f, $r_i$, $s_i$ und $ID_i$ einen öffentlichen Schlüssel eines Schlüsselautentifizierungszentrums bezeichnen, eine Erzeugungsquelle der finiten Gruppe G, eine Hash-Funktion, einen öffentlichen Schlüssel für eine Partei i, einen Geheimschlüssel für die Partei i und ID-Information für die Partei i, worin der Schritt (b) die Schritte umfasst:

(b1) statistisches Auswählen temporärer Geheimschlüssel $u_j$ und $v_j$ zwischen 1 und p-1;

(b2) Erzeugen temporärer öffentlicher Schlüssel $w_j = y^{vj} \pmod q$ und $n_j = w_1^{uj} \pmod q$; und

(b3) Erzeugen des Signaturwerts $\eta_j = (f(n_j) - v_j w_1)s_j^{-1} \pmod p$.

**12.** Verfahren zur Verteilung eines gemeinsamen Konferenzschlüssels zum Verschlüsseln von einer Konferenzauslösepartei zu Konferenzteilnehmerparteien nach Anspruch 11, worin der Schritt (b1) die Schritte umfasst:

(b11) statistisches Auswählen des ersten temporären Geheimschlüssels $u_j$ zwischen 1 und p-1; und
(b12) Erzeugen des zweiten temporären Geheimschlüssels $v_j$ durch Anwenden der Hash-Funktion auf den ersten temporären Geheimschlüssel $u_j$.

**13.** Verfahren zur Verteilung eines gemeinsamen Konferenzschlüssels zum Verschlüsseln von einer Konferenzauslösepartei zu Konferenzteilnehmerparteien nach Anspruch 11 oder 12, worin der Schritt (a) die Schritte umfasst:

(a1) Empfangen einer Mitteilung ($ID_1$, $r_1$, $w_1$, $n_1$, $n_1$, zeit) von der Konferenzauslösepartei, worin die Parameter $ID_1$, $r_1$, $w_1$, $n_1$, $n_1$ und zeit ID-Information der Konferenzauslösepartei, einen permanenten öffentlichen Schlüssel der Konferenzauslösepartei, von der Konferenzauslösepartei erzeugte temporäre öffentliche Schlüssel, einen von der Konferenzauslösepartei erzeugten Signaturwert und Zeitinformation bezeichnen; und
(a2) Bestimmen, dass die Mitteilung eine Gleichung
$y^{f(n1, ID1, zeit)} = w_1^{w1}(a^{EID1}r_1^{-r1})^{\eta 1}(mod\ q)$, worin $EID_1 = f(ID_1)$ erfüllt.

**14.** Verfahren zur Verteilung eines gemeinsamen Konferenzschlüssels zum Verschlüsseln von einer Konferenzauslösepartei zu Konferenzteilnehmerparteien nach Anspruch 13, worin der Schritt (e) ein Schritt zum Erzeugen eines gemeinsamen Konferenzschlüssels $K_c = z_j \cdot (n_1^{uj})^{-1}\ (mod\ q)$ ist und worin $z_j$ die Erzeugungsvariable für den gemeinsamen Schlüssel empfangen von der Konferenzauslösepartei bezeichnet.

**15.** Verfahren zur Verteilung eines gemeinsamen Konferenzschlüssels zum Verschlüsseln von einer Konferenzauslösepartei zu Konferenzteilnehmerparteien in einer einzigen Konferenzsitzung auf einem ID-basierten kryptographischen System über ein Computernetzwerk, wobei das Verfahren die Schritte umfasst, die bei den Konferenzteilnehmerparteien ausgeführt werden:

(a) Empfangen einer Mitteilung mit ID-Information, zwei temporären öffentlichen Schlüsseln und einem bestimmten Signaturwert der Konferenzauslösepartei von der Konferenzauslösepartei und Bestimmen der Gültigkeit der Mitteilung;
(b) Erzeugen zweier temporärer Geheimschlüssel für die Konferenzteilnehmerparteien, Erzeugen zweier temporärer öffentlicher Schlüssel für die Konferenzteilnehmerparteien unter Verwendung der temporären Geheimschlüssel für die Konferenzteilnehmerparteien und Erzeugen eines Signaturwerts, erhalten durch Anwenden einer bestimmten Signaturfunktion auf die Schlüssel;
(c) Transportieren einer Mitteilung mit den temporären öffentlichen Schlüsseln für die Konferenzteilnehmerparteien und des Signaturwerts zur Konferenzauslösepartei;
(d) Empfangen einer Mitteilung mit einer Erzeugungsvariable für den gemeinsamen Schlüssel und verschlüsselte ID-Information der Konferenzauslösepartei von der Konferenzauslösepartei;
(e) Erzeugen der gemeinsamen Konferenzschlüssel unter Verwendung der Erzeugungsvariable für den gemeinsamen Schlüssel, eines von zwei temporären Geheimschlüsseln für die Konferenzteilnehmerpartei und des temporären öffentlichen Schlüssels für die Konferenzauslösepartei, der unter Verwendung des einen der zwei temporären Geheimschlüssel erzeugt ist; und
(f) Entschlüsseln der verschlüsselten ID-Information der Konferenzauslösepartei unter Verwendung des gemeinsamen Konferenzschlüssels und Bestimmen, dass der gemeinsame Konferenzschlüssel gültig ist,

worin das ID-basierte kryptographische System ein System ist, das eine Weil-Pairing-Funktion in einer finiten Ellipsenkurven-Verschlüsselungsgruppe G mit einer ausreichend großen Primzahl p als Ordnung verwendet, und worin der Schritt (b) die Schritte umfasst:

(b1) statistisches Auswählen temporärer Geheimschlüssel $u_1$ und $v_1$ zwischen 1 und p-1;
(b2) Erzeugen temporärer öffentlicher Schlüssel $w_j = [v_j]a$ und $n_j = [u_j]w_1$, worin der Parameter a eine Erzeugungsquelle für die finite Ellipsenkurven-Verschlüsselungsgruppe G ist; und
(b3) Erzeugen des Signaturwerts $\eta_j = [v_j^{-1}]([(f_3\ (n_j)]\ a + [f_3\ (w_j)]s_j)$, worin $f_3$ und $s_j$ eine Hash-Funktion, die in der finiten Ellipsenkurven-Verschlüsselungsgruppe G definiert ist, und einen permanenten Geheimschlüssel der Partei j bezeichnen.

**16.** Verfahren zur Verteilung eines gemeinsamen Konferenzschlüssels zum Verschlüsseln von einer Konferenzauslösepartei zu Konferenzteilnehmerparteien nach Anspruch 15, worin der Schritt (b1) die Schritte umfasst:

(b11) statistisches Auswählen des ersten temporären Geheimschlüssels $u_j$ zwischen 1 und p-1; und
(b12) Erzeugen des zweiten temporären Geheimschlüssels $v_j$ durch Anwenden der Hash-Funktion auf den ersten temporären Geheimschlüssel $u_j$.

**17.** Verfahren zur Verteilung eines gemeinsamen Konferenzschlüssels zum Verschlüsseln von einer Konferenzauslösepartei zu Konferenzteilnehmerparteien nach Anspruch 15 oder 16, worin der Schritt (a) die Schritte umfasst:

(a1) Empfangen einer Mitteilung ($ID_1$, $w_1$, $n_1$, $n_1$, zeit) von der Konferenzauslösepartei, worin die Parameter $ID_1$, $w_1$, $n_1$, $n_1$ und zeit ID-Information der Konferenzauslösepartei, von der Konferenzauslösepartei erzeugte temporäre öffentliche Schlüssel, einen von der Konferenzauslösepartei erzeugten Signaturwert und Zeitinformation bezeichnen; und
(a2) Bestimmen, dass die Mitteilung eine Gleichung
$e(w_1, \eta_1) = e(a, [f_2 (f_3 (n_1), ID_1, zeit)] a) \cdot e(y, [f_3 (w_1)]r_1)$ erfüllt, worin e, $f_2$, $f_3$, y und $r_1$ eine Weil-Pairing-Funktion, die auf einer Ellipsenkurve definiert ist, eine Hash-Funktion, die in einer ganzzahligen Domäne definiert ist, eine Hash-Funktion, die in der finiten Ellipsenkurven-Verschlüsselungsgruppe G definiert ist, einen öffentlichen Schlüssel eines Schlüsselautentifizierungszentrums und einen permanenten öffentlichen Schlüssel der Konferenzauslösepartei bezeichnen.

**18.** Verfahren zur Verteilung eines gemeinsamen Konferenzschlüssels zum Verschlüsseln von einer Konferenzauslösepartei zu Konferenzteilnehmerparteien nach Anspruch 17, worin der Schritt (e) ein Schritt zum Erzeugen eines gemeinsamen Konferenzschlüssels
$K_c = z_j - [u_j]n_1$ ist und worin $z_j$ die Erzeugungsvariable für den gemeinsamen Schlüssel bezeichnet, die von der Konferenzauslösepartei empfangen ist.

**19.** Verfahren zur Verteilung eines gemeinsamen Konferenzschlüssels zum Verschlüsseln von einer Konferenzauslösepartei zu Konferenzteilnehmerparteien nach einem der Ansprüche 11 bis 18, worin der Schritt (f) die Schritte umfasst:

(f1) Entschlüsseln der verschlüsselten ID-Information der Konferenzauslösepartei, die von der Konferenzteilnehmerpartei empfangen ist, unter Verwendung des gemeinsamen Konferenzschlüssels; und
(f2) Bestimmen, dass die entschlüsselte ID-Information der Konferenzauslösepartei identisch ist zur ID-Information der Konferenzauslösepartei, die in Schritt (a) empfangen ist.

**20.** Computerlesbares Speichermedium, auf dem ein Programm aufgezeichnet ist, das geeignet ist, alle Schritte eines Verfahrens nach einem der vorhergehenden Ansprüche durchzuführen, wenn es auf einem Computer ausgeführt wird.

## Revendications

**1.** Procédé de distribution d'une clé secrète de session pour un chiffrement depuis une partie déclenchant une session vers une pluralité de parties participant à une session lors d'une session de conférence unique sur un système cryptographique basé sur l'identité (ID-based) sur un réseau informatique, le procédé comprenant les étapes effectuées au niveau de la partie déclenchant une session et consistant à :

(a) générer (s100) deux clés secrètes temporaires pour la partie déclenchant une session, générer deux clés publiques temporaires pour la partie déclenchant une session en utilisant les clés secrètes temporaires de la partie déclenchant une session et générer une valeur de signature obtenue en appliquant une fonction de signature prédéterminée aux clés ;
(b) acheminer vers les parties participant à une session un message (5) comprenant des informations relatives à l'identité (ID) de la partie déclenchant une session, les clés publiques temporaires de la partie déclenchant une session et la valeur de signature ;
(c) recevoir depuis les parties participant à une session des messages (10) comprenant les clés publiques temporaires des parties participant à une session et déterminer la validité des messages ;
(d) générer des variables de génération de clés secrètes pour les parties participant à une session qui ont envoyé des messages valides ;
(e) générer la clé secrète de session (s320) en utilisant l'une des deux clés secrètes temporaires de la partie déclenchant une session et la clé publique temporaire de la partie déclenchant une session générée en utilisant ladite une des deux clés secrètes temporaires et chiffrer les informations relatives à l'identité de la partie déclenchant une session en utilisant la clé secrète de session ; et

(f) acheminer un message (15) comprenant les variables de génération de clés secrètes et les informations relatives à l'identité chiffrées vers les parties participant à une session qui ont envoyé des messages valides,

dans lequel le système cryptographique basé sur l'identité est un système satisfaisant l'équation $y^{S_i} = \alpha^{f(ID_i)}(r_i^{r_i})^{-1}$ mod $q$ sur un groupe fini G ayant un ordre p, c'est-à-dire un groupe partiel de GF(q)*, où q est un nombre premier suffisamment grand et l'entier relatif associé q-1 a p en tant que facteur et dans laquelle les paramètres y, $\alpha$, f, $r_i$, $s_i$ et $ID_i$ désignent une clé publique d'un centre d'authentification de clés, une source de génération du groupe fini G, une fonction de hachage, une clé publique d'une partie i, une clé secrète de la partie i et les informations relatives à l'identité, respectivement,

dans lequel l'étape (a) comprend les étapes consistant à :

(a1) sélectionner de façon aléatoire les clés secrètes temporaires $u_1$ et $v_1$ entre 1 et p-1 ;

(a2) générer les clés publiques temporaires (s100) $w_1 = y^{v_1}$ (mod $q$) et $n_1 = w_1^{u_1}$ (mod $q$) ; et

(a3) générer la valeur de signature (s110) $\eta_1 = (f(n_1, ID_1, temps) - v_1 w_1)s_1^{-1}(mod\ p)$, où les paramètres $ID_1$ et *temps* désignent les informations relatives à l'identité de la partie déclenchant une session et les informations relatives au temps.

2.  Procédé de distribution d'une clé secrète de session pour un chiffrement depuis une partie déclenchant une session vers une pluralité de parties participant à une session selon la revendication 1, dans lequel l'étape (a1) comprend les étapes consistant à :

(a11) sélectionner de façon aléatoire la première clé secrète temporaire $u_1$ entre 1 et p-1 ; et

(a12) générer la seconde clé secrète temporaire $v_1$ en appliquant la fonction de hachage sur la première clé secrète temporaire $u_1$.

3.  Procédé de distribution d'une clé secrète de session pour un chiffrement depuis une partie déclenchant une session vers une pluralité de parties participant à une session selon la revendication 1 ou 2, dans lequel l'étape (c) comprend les étapes consistant à :

(c1) recevoir les messages ($ID_j$, $r_j$, $w_j$, $n_j$, $\eta_j$) (10) provenant des parties participant à une session, dans lesquels les paramètres $ID_j$, $r_j$, $w_j$, $n_j$ et $\eta_j$ désignent les informations relatives à l'identité de la partie j, une clé publique permanente de la partie j, les clés publiques temporaires générées par la partie j et une valeur de signature générée par la partie j ; et

(c2) déterminer (s300) que les messages (10) reçus des parties j satisfont l'équation $y^{f(n_j)} = w_j^w(\alpha^{EID_j} r_j^{-r_i})^{n_j}$ (mod $q$), dans laquelle $EID_j = f(ID_j)$.

4.  Procédé de distribution d'une clé secrète de session pour un chiffrement depuis une partie déclenchant une session vers une pluralité de parties participant à une session selon la revendication 3, dans lequel l'étape (d) est une étape consistant à générer la variable de génération de clés publiques $z_j = (n_1 \cdot n_j)^{u_1}$ (mod $q$) pour les parties participant à une session qui satisfont l'équation à l'étape (c2).

5.  Procédé de distribution d'une clé secrète de session pour un chiffrement depuis une partie déclenchant une session vers une pluralité de parties participant à une session selon la revendication 3 ou 4, dans lequel l'étape (e) comprend les étapes consistant à :

(e1) générer la clé secrète de session $K_C = n_1^{U_1}$ (mod $q$).

(e2) chiffrer les informations relatives à l'identité de la partie déclenchant une session en utilisant la clé secrète de session pour générer $E_{KC}(ID_1)$, où E désigne l'algorithme de chiffrement.

6.  Procédé de distribution d'une clé secrète de session pour un chiffrement depuis une partie déclenchant une session vers une pluralité de parties participant à une session lors d'une session de conférence unique sur un système cryptographique basé sur l'identité sur un réseau informatique, le procédé comprenant les étapes effectuées au niveau de la partie déclenchant une session et consistant à :

(a) générer (s100) deux clés secrètes temporaires pour la partie déclenchant une session, générer deux clés publiques temporaires pour la partie déclenchant une session en utilisant les clés secrètes temporaires de la partie déclenchant une session et générer une valeur de signature obtenue en appliquant une fonction de signature prédéterminée aux clés ;

(b) acheminer vers les parties participant à une session un message (5) comprenant les informations relatives à l'identité de la partie déclenchant une session, les clés publiques temporaires de la partie déclenchant une session et la valeur de signature ;

(c) recevoir depuis les parties participant à une session des messages (10) comprenant les clés publiques temporaires des parties participant à une session et déterminer la validité des messages ;

(d) générer des variables de génération de clés secrètes pour les parties participant à une session qui ont envoyé des messages valides ;

(e) générer la clé secrète de session (s320) en utilisant l'une des deux clés secrètes temporaires de la partie déclenchant une session et la clé publique temporaire de la partie déclenchant une session générée en utilisant ladite une des deux clés secrètes temporaires et chiffrer les informations relatives à l'identité de la partie déclenchant une session en utilisant la clé secrète de session ; et

(f) acheminer un message (15) comprenant les variables de génération de clés secrètes et les informations relatives à l'identité chiffrées vers les parties participant à une session qui ont envoyé des messages valides,

dans lequel le système cryptographique basé sur l'identité est un système utilisant une opération d'appariement de Weil (Weil Pairing) dans un groupe de chiffrement fini à courbe elliptique G ayant un nombre primaire suffisamment grand p en tant qu'ordre ;

dans lequel l'étape (a) comprend les étapes consistant à :

(a1) sélectionner de façon aléatoire les clés secrètes temporaires $u_1$ et $v_1$ entre 1 et p-1 ;

(a2) générer les clés publiques temporaires (s100) $w_1 = [v_1]\alpha$ et $n_1 = [u_1]w_1$, où le paramètre $\alpha$ est une source de génération du groupe de chiffrement fini à courbe elliptique G ; et

(a3) générer (s110) la valeur de signature $\eta_1 = [v_1^{-1}]([f_2(f_3(n_1), ID_1, temps)]\alpha + [f_3(w_1)]s_1)$, où $f_2$, $f_3$, $ID_1$, *temps* et $s_1$ désignent une fonction de hachage définie dans un domaine d'entiers relatifs, une fonction de hachage définie dans le groupe de chiffrement fini à courbe elliptique G, les informations relatives à l'identité de la partie déclenchant une session, les informations relatives au temps et une clé secrète permanente de la partie déclenchant une session, respectivement.

7. Procédé de distribution d'une clé secrète de session pour un chiffrement depuis une partie déclenchant une session vers une pluralité de parties participant à une session selon la revendication 6, dans lequel l'étape (a1) comprend les étapes consistant à :

(a11) sélectionner de façon aléatoire la première clé secrète temporaire $u_1$ entre 1 et p-1 ; et

(a12) générer la seconde clé secrète temporaire $v_1$ en appliquant la fonction de hachage sur la première clé secrète temporaire $u_1$.

8. Procédé de distribution d'une clé secrète de session pour un chiffrement depuis une partie déclenchant une session vers une pluralité de parties participant à une session selon la revendication 6 ou 7, dans lequel l'étape (c) comprend les étapes consistant à :

(c1) recevoir les messages ($ID_j$, $w_j$, $n_j$, $\eta_j$) provenant des parties participant à une session, dans lesquels les paramètres $ID_j$, $w_j$, $n_j$ et $\eta_j$ désignent les informations relatives à l'identité de la partie j, les clés publiques temporaires générées par la partie j et une valeur de signature générée par la partie j ; et

(c2) déterminer (s300) que la partie j satisfait l'équation $e(w_j, \eta_j) = e(\alpha, [f_3(n_j)]\alpha)\cdot e(y, [f_3(w_j)]r_j)$, dans laquelle e, y et $r_j$ désignent une fonction d'appariement de Weil définie sur une courbe elliptique, une clé publique d'un centre d'authentification de clés et une clé publique permanente de la partie participant à une session j.

9. Procédé de distribution d'une clé secrète de session pour un chiffrement depuis une partie déclenchant une session vers une pluralité de parties participant à une session selon la revendication 8, dans lequel l'étape (d) est une étape consistant à générer la variable de génération de clés publiques $z_j = [u_1](n_1 + n_j)$ pour les parties participant à une session qui satisfont l'équation à l'étape (c2).

10. Procédé de distribution d'une clé secrète de session pour un chiffrement depuis une partie déclenchant une session vers une pluralité de parties participant à une session selon la revendication 8 ou 9, dans lequel l'étape (e) comprend les étapes consistant à :

(e1) générer la clé secrète de session $K_C = [u_1]n_1$ ; et

(e2) chiffrer les informations relatives à l'identité de la partie déclenchant une session en utilisant la clé secrète de session pour générer $E_{KC}(ID_1)$, où E désigne l'algorithme de chiffrement.

**11.** Procédé de distribution d'une clé secrète de session pour un chiffrement depuis une partie déclenchant une session vers des parties participant à une session lors d'une session de conférence unique sur un système cryptographique basé sur l'identité sur un réseau informatique, le procédé comprenant les étapes effectuées au niveau des parties participant à une session et consistant à :

(a) recevoir de la partie déclenchant une session un message comprenant les informations relatives à l'identité, deux clés publiques temporaires et une valeur de signature prédéterminée de la partie déclenchant une session et déterminer la validité du message ;

(b) générer deux clés secrètes temporaires pour les parties participant à une session, générer deux clés publiques temporaires pour les parties participant à une session en utilisant les clés secrètes temporaires des parties participant à une session et générer une valeur de signature obtenue en appliquant une fonction de signature prédéterminée aux clés ;

(c) acheminer vers la partie déclenchant une session un message comprenant les clés publiques temporaires des parties participant à une session et la valeur de signature ;

(d) recevoir de la partie déclenchant une session un message comprenant une variable de génération de clés secrètes et des informations relatives à l'identité chiffrées de la partie déclenchant une session ;

(e) générer la clé secrète de session en utilisant la variable de génération de clés secrètes, l'une des deux clés secrètes temporaires de la partie participant à une session et la clé publique temporaire de la partie déclenchant une session générée en utilisant ladite une des deux clés secrètes temporaires ; et

(f) déchiffrer les informations relatives à l'identité chiffrées de la partie déclenchant une session en utilisant la clé secrète de session et déterminer que la clé secrète de session est valide,

dans lequel le système cryptographique basé sur l'identité est un système satisfaisant l'équation $y^{S_1} = \alpha^{f(ID_i)} (r_i^{r_i})^{-1}$ mod $q$ sur un groupe fini G ayant un ordre p, c'est-à-dire un groupe partiel de GF(q)*, où q est un nombre premier suffisamment grand et l'entier relatif associé q-1 a p en tant que facteur et dans laquelle les paramètres y, $\alpha$, f, $r_i$, $s_i$ et $ID_i$ désignent une clé publique d'un centre d'authentification de clés, une source de génération du groupe fini G, une fonction de hachage, une clé publique d'une partie i, une clé secrète de la partie i et les informations relatives à l'identité de la partie i, respectivement,

dans lequel l'étape (b) comprend les étapes consistant à :

(b1) sélectionner de façon aléatoire les clés secrètes temporaires $u_j$ et $v_j$ entre 1 et p-1 ;

(b2) générer des clés publiques temporaires $w_j = y^{v_j} \pmod{q}$ et $n_j = w_1^{u_j} \pmod{q}$ ; et

(b3) générer la valeur de signature $\eta_j = (f(n_j)-v_j w_j)s_j^{-1} \pmod{p}$.

**12.** Procédé de distribution d'une clé secrète de session pour un chiffrement depuis une partie déclenchant une session vers des parties participant à une session selon la revendication 11, dans lequel l'étape (b1) comprend les étapes consistant à :

(b11) sélectionner de façon aléatoire la première clé secrète temporaire $u_j$ entre 1 et p-1 ; et

(b12) générer la seconde clé secrète temporaire $v_j$ en appliquant la fonction de hachage sur la première clé secrète temporaire $u_j$.

**13.** Procédé de distribution d'une clé secrète de session pour un chiffrement depuis une partie déclenchant une session vers des parties participant à une session selon la revendication 11 ou 12, dans lequel l'étape (a) comprend les étapes consistant à :

(a1) recevoir un message ($ID_1$, $r_1$, $w_1$, $n_1$, $\eta_1$, *temps*) provenant de la partie déclenchant une session, dans lequel les paramètres $ID_1$, $r_1$, $w_1$, $n_1$, $\eta_1$ et *temps* désignent les informations relatives à l'identité de la partie déclenchant une session, une clé publique permanente de la partie déclenchant une session, les clés publiques temporaires générées par la partie déclenchant une session, une valeur de signature générée par la partie déclenchant une session et les informations relatives au temps ; et

(a2) déterminer que le message satisfait l'équation $y^{f(n_1, ID_1, temps)} = w_1^{w_1} (\alpha^{EID_1}r_1^{-r_1})^{n_1} \pmod{q}$, dans laquelle $EID_1 = f(ID_1)$.

**14.** Procédé de distribution d'une clé secrète de session pour un chiffrement depuis une partie déclenchant une session vers des parties participant à une session selon la revendication 13, dans lequel l'étape (e) est une étape consistant à générer la clé secrète de session $K_C = z_j \cdot (n_1^{u_j})^{-1}$ (mod $q$) et où $z_j$ désigne la variable de génération de clés secrètes reçue de la partie déclenchant une session.

**15.** Procédé de distribution d'une clé secrète de session pour un chiffrement depuis une partie déclenchant une session vers des parties participant à une session lors d'une session de conférence unique sur un système cryptographique basé sur l'identité sur un réseau informatique, le procédé comprenant les étapes effectuées au niveau des parties participant à une session et consistant à :

(a) recevoir de la partie déclenchant une session un message comprenant les informations relatives à l'identité, deux clés publiques temporaires et une valeur de signature prédéterminée de la partie déclenchant une session et déterminer la validité du message ;

(b) générer deux clés secrètes temporaires pour les parties participant à une session, générer deux clés publiques temporaires pour les parties participant à une session en utilisant les clés secrètes temporaires des parties participant à une session et générer une valeur de signature obtenue en appliquant une fonction de signature prédéterminée aux clés ;

(c) acheminer vers la partie déclenchant une session un message comprenant les clés publiques temporaires des parties participant à une session et la valeur de signature ;

(d) recevoir de la partie déclenchant une session un message comprenant une variable de génération de clés secrètes et des informations relatives à l'identité chiffrées de la partie déclenchant une session ;

(e) générer la clé secrète de session en utilisant la variable de génération de clés secrètes, l'une des deux clés secrètes temporaires de la partie participant à une session et la clé publique temporaire de la partie déclenchant une session générée en utilisant ladite une des deux clés secrètes temporaires ; et

(f) déchiffrer les informations relatives à l'identité chiffrées de la partie déclenchant une session en utilisant la clé secrète de session et déterminer que la clé secrète de session est valide,

dans lequel le système cryptographique basé sur l'identité est un système utilisant une opération d'appariement de Weil dans un groupe de chiffrement fini à courbe elliptique G ayant un nombre primaire suffisamment grand p en tant qu'ordre, et

dans lequel l'étape (b) comprend les étapes consistant à :

(b1) sélectionner de façon aléatoire les clés secrètes temporaires $u_j$ et $v_j$ entre 1 et p-1 ;

(b2) générer les clés publiques temporaires $w_j = [v_j]\alpha$ et $n_j = [u_j]w_1$, où le paramètre $\alpha$ est une source de génération du groupe de chiffrement fini à courbe elliptique G ; et

(b3) générer la valeur de signature $\eta_j = [v_j^{-1}]([f_3(n_j)]\alpha + [f_3(w_j)]s_j)$, où $f_3$ et $s_j$ désignent une fonction de hachage définie dans le groupe de chiffrement fini à courbe elliptique G et une clé secrète permanente de la partie j, respectivement.

**16.** Procédé de distribution d'une clé secrète de session pour un chiffrement depuis une partie déclenchant une session vers des parties participant à une session selon la revendication 15, dans lequel l'étape (b1) comprend les étapes consistant à :

(b11) sélectionner de façon aléatoire la première clé secrète temporaire $u_j$ entre 1 et p-1 ; et

(b12) générer la seconde clé secrète temporaire $v_j$ en appliquant la fonction de hachage sur la première clé secrète temporaire $u_j$.

**17.** Procédé de distribution d'une clé secrète de session pour un chiffrement depuis une partie déclenchant une session vers des parties participant à une session selon la revendication 15 ou 16, dans lequel l'étape (a) comprend les étapes consistant à :

(a1) recevoir un message ($ID_1$, $w_1$, $n_1$, $\eta_1$, *temps*) provenant de la partie déclenchant une session, dans lequel les paramètres $ID_1$, $w_1$, $n_1$, $\eta_1$ et *temps* désignent les informations relatives à l'identité de la partie déclenchant une session, les clés publiques temporaires générées par la partie déclenchant une session, une valeur de signature générée par la partie déclenchant une session et les informations relatives au temps ; et

(a2) déterminer que le message satisfait l'équation $e(w_1, \eta_1) = e(\alpha, [f_2(f_3(n_1), ID_1, temps)]\alpha) \cdot e(y, [f_3(w_1)]r_1)$, dans laquelle e, $f_2$, $f_3$, Y et $r_1$ désignent une fonction d'appariement de Weil définie sur une courbe elliptique, une fonction de hachage définie dans un domaine d'entiers relatifs, une fonction de hachage définie dans le groupe de chiffrement fini à courbe elliptique G, une clé publique d'un centre d'authentification de clés et une clé publique permanente de la partie déclenchant une session.

18. Procédé de distribution d'une clé secrète de session pour un chiffrement depuis une partie déclenchant une session vers des parties participant à une session selon la revendication 17, dans lequel l'étape (e) est une étape consistant à générer la clé secrète de session $K_C = z_j - [u_j]n_1$ et où $z_j$ désigne la variable de génération de clés secrètes reçue de la partie déclenchant une session.

19. Procédé de distribution d'une clé secrète de session pour un chiffrement depuis une partie déclenchant une session vers des parties participant à une session selon l'une quelconque des revendications 11 à 18, dans lequel l'étape (f) comprend les étapes consistant à :

(f1) déchiffrer les informations relatives à l'identité chiffrées de la partie déclenchant une session reçues de la partie participant à une session en utilisant la clé secrète de session ; et
(f2) déterminer que les informations relatives à l'identité déchiffrées de la partie déclenchant une session sont identiques aux informations relatives à l'identité de la partie déclenchant une session reçues à l'étape (a).

20. Support de stockage pouvant être lu par un ordinateur sur lequel un programme est enregistré, adapté pour effectuer toutes les étapes d'un procédé selon l'une quelconque des revendications précédentes lorsqu'il est exécuté dans un ordinateur.

# FIG. 1

$x_a$ : private                                         $x_b$ : private

$y_a = g^{x_a}$ : public                                 $y_b = g^{x_b}$ : public

$x_a$ ✛ $y_b$                     $y_a$                  $x_b$ ✛ $y_a$

| e - e a |     | SEND ➡ |     | e - e a |
| Ag  t |     | ⬅ SEND |     | Ag  t |

                                 $y_b$

$K = y_b^{x_a} = g^{x_a x_b}$ ⇠ | TA | ⇢ $K = y_a^{x_b} = g^{x_a x_b}$

Sae Se et e .                         Sae Se et e

# FIG. 2

SESSION INITIATING PARTY(A)　　　　　SESSION INITIATING PARTY(B,C,D,....)

S100 — GENERATING TEMPORARY PUBLIC KEYS

S110 — APPLYING SIGATURE FUNCTION

S120 — GENERATING MESSAGES

5

S200 — DETERMINING VALIDITY OF SIGNATURE VALUES

S210 — IS THE SIGNATURE VALID?

No → END

Yes

S220 — GENERATING PARAMETERS TO BE USED FOR GENERATING SESSION KEYS

S230 — APPLYING SIGNATURE FUNCTION

S240 — GENERATING MESSAGES

S300 — DETERMINING VALIDITY OF MESSAGES

10

S310 — IS THE MESSAGE VALID?

No → END

Yes

S320 — GENERATING SESSION SHARED KEYS

S330 — ENCRYPTION BY APPLYING THE SESSION KEYS

S340 — GENERATING MESSAGES

15

S400 — GENERATING THE SESSION KEYS

S410 — DECRYPTION BY APPLYING THE SESSION KEYS

S420 — DETERMINING VALIDITY OF ID